# FASCICULE DE BREVET EUROPEEN

(11) **EP 4 483 041 B1**
(45) Date de publication et mention de la délivrance du brevet: **28.01.2026**
(21) Numéro de dépôt: 23708528.7
(22) Date de dépôt: 20.02.2023
(51) Int. Cl.: F01D 11/00, F01D 5/30, B29B 11/16, F01D 5/28, D03D 25/00, B29C 70/22

(54) **SYSTEME DE FIXATION D'AUBE DE TURBOMACHINE**
SYSTEM ZUR BEFESTIGUNG EINER TURBOMASCHINENSCHAUFEL
SYSTEM FOR ATTACHING A TURBOMACHINE BLADE

(30) Priorité: 21.02.2022 FR 2201522
(43) Date de publication de la demande: 01.01.2025
(73) Titulaire: SAFRAN AIRCRAFT ENGINES, 75015 Paris (FR)
(72) Inventeur: SCHNEIDER-DIE-GROSS, Julien Paul, 77550 MOISSY-CRAMAYEL (FR); IGLESIAS CANO, Celia, 77550 MOISSY-CRAMAYEL (FR); LAUWICK, Lucas Antoine Christophe, 77550 MOISSY-CRAMAYEL (FR)
(74) Mandataire: Cabinet Beau de Loménie
(86) Numéro de dépôt international: PCT/FR2023/050238
(87) Numéro de publication internationale: WO 2023/156751

(56) Documents cités:
- WO-A1-2013/079860
- WO-A1-2016/174346
- WO-A1-2018/189470
- FR-A1- 2 946 999
- FR-A1- 2 981 602
- US-A1- 2018 119 549

## Description

### Domaine Technique

Le présent exposé concerne le domaine des aubes en matériau tissé tridimensionnellement pour turbomachine, notamment pour aéronef, et plus particulièrement la fixation de telles aubes sur la turbomachine.

### Technique antérieure

On connaît dans les turbomachines, notamment pour aéronef, des systèmes pour fixer des aubes en matériau composite, par exemple des aubes d'une soufflante, sur des pièces qui sont montées sur la structure centrale du moteur ou qui font partie de cette structure. Ces pièces sont métalliques en raison des contraintes mécaniques et d'intégration sur la structure centrale du moteur auxquelles elles doivent répondre.

Lors du fonctionnement de la turbomachine (aéronef en vol), les aubes de la soufflante sont soumises de manière principale à des sollicitations en flexion (en raison de l'incidence des aubes par rapport au flux d'air rencontré) qui génèrent des modes vibratoires et également à des sollicitations de pression aérodynamique constante. Ces sollicitations s'appliquent de manière statique et dynamique sur les aubes. En cas d'impact (ex : corps étrangers tels que oiseaux...) les aubes peuvent être soumises à des sollicitations de plus grandes amplitudes.

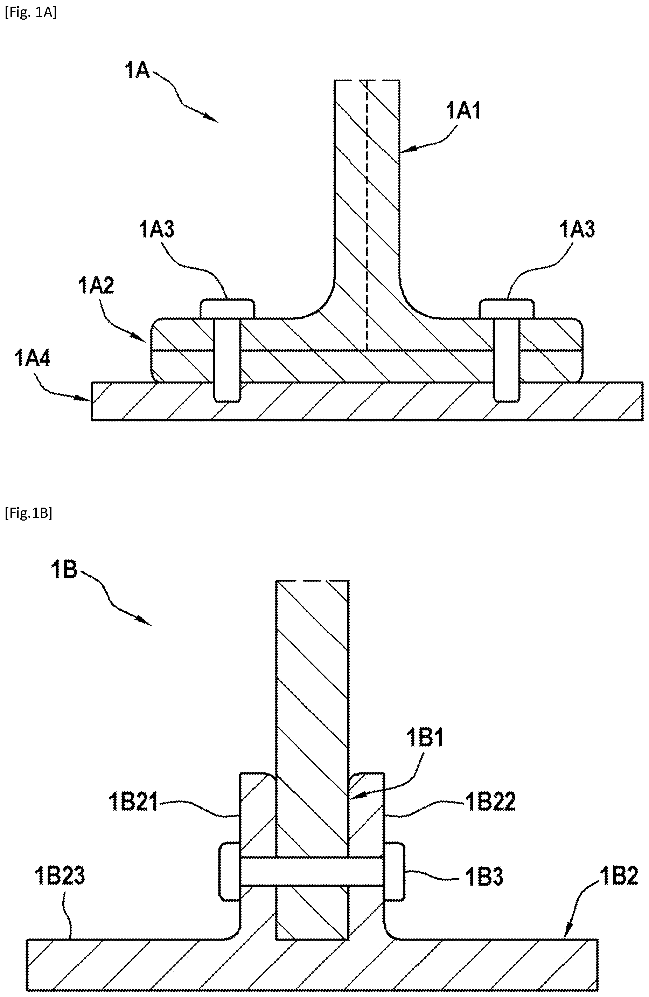

On connaît aujourd'hui deux types de fixation d'aube qui sont :
- d'une part, une fixation par bridage comme illustré sur la figure 1A où une aube 1A (partiellement représentée) en matériau composite présente en section transversale une forme en T retournée avec la barre verticale 1A1 du T formant la pale de l'aube et la barre horizontale 1A2 du T formant le pied de l'aube et où des éléments de fixation 1A3 traversent l'épaisseur du pied d'aube 1A2 pour venir le fixer à une pièce métallique horizontale 1A4 disposée en dessous,
- et, d'autre part, une fixation tangentielle comme illustré sur la figure 1B où une aube 1B (partiellement représentée) en matériau composite présente en section transversale une forme sensiblement verticale dont le pied d'aube1 B1 est enchâssé dans une pièce métallique 1B2 disposée en dessous, plus particulièrement, dans l'espace ménagé entre deux parois parallèles 1B21 et 1B22 de la pièce 1B2 qui s'étendent perpendiculairement à une base horizontale 1B23 de cette pièce, des éléments de fixation 1B3 traversant horizontalement les deux parois parallèles 1B21 et 1B22 et le pied d'aube 1B1 pour fixer cette dernière à la pièce 1B2.

Bien que chacune de ces solutions soit satisfaisante, elles présentent néanmoins certains points d'amélioration.

L'attache avec bridage de la figure 1A nécessite de modifier la géométrie de l'aube en partie inférieure de celle-ci en formant une pièce en composite avec un angle de 90° (pied d'aube 1A2 perpendiculaire à la pale 1A1). Il en résulte une transformation des sollicitations exercées sur l'aube qui passent de sollicitations exercées dans le plan de la pale à des sollicitations exercées hors plan pouvant s'avérer limitantes pour les technologies composites. Cependant, cette modification géométrique et l'éloignement des fixations mécaniques de la pale de l'aube permettent d'obtenir un moment quadratique plus important et d'offrir une raideur en flexion/torsion plus importante de la structure ainsi réalisée.

L'attache tangentielle de la figure 1B ne nécessite pas une telle modification géométrique de l'aube et reprend l'effort de flexion dû au phénomène de cisaillement qui se produit au niveau des perçages des éléments de fixation 1B3. Cependant, une telle structure offre le moment quadratique le plus faible entre les deux structures des figures 1A et 1B, ce qui rend la structure avec attache tangentielle de la figure 1B bien moins rigide et résistante que la structure avec attache par bridage de la figure 1B vis-à-vis des modes de flexion auxquels est soumise la pale de l'aube. FR 2 946 999 A1 décrit un élément de distributeur de turbine en CMC, un procédé pour sa fabrication, un distributeur de turbine et une turbine incorporant cet élément de distributeur.

Le présent exposé vise ainsi à répondre au moins partiellement à ces problématiques en proposant une préforme d'aube, une aube et un système de fixation d'aube adaptés.

### Exposé de l'invention

A cet effet, le présent exposé concerne un système de fixation d'une aube pour turbomachine, comprenant :
- une aube pour turbomachine réalisée de manière monolithique en matériau composite à partir d'une préforme d'aube en matériau composite tissé obtenue par tissage tridimensionnel, la préforme d'aube ayant été mise en forme dans un moule et noyée dans une matrice, la préforme d'aube présentant une forme générale qui est allongée suivant une première direction Y, représentant la direction de la hauteur de l'aube, et qui s'étend suivant deux autres directions perpendiculaires dont une deuxième direction axiale Z représentant la direction de la corde de l'aube et une troisième direction transversale X représentant la direction de l'épaisseur de l'aube, la préforme d'aube comprenant, alignées suivant la première direction Y, une zone inférieure Z1)apte à former un pied d'aube et une zone supérieure Z2 apte à former une pale d'aube incluant un sommet d'aube, la zone inférieure Z1 étant tissée et conformée de manière à comprendre deux peaux écartées l'une de l'autre suivant la direction transversale X, ménageant ainsi entre les deux peaux un espace libre qui forme une déliaison (38) dans le matériau tissé, chaque peau étant apte à former une portion du pied d'aube,
caractérisé en ce que le système de fixation comporte:
- au niveau du pied d'aube, deux portions du pied d'aube écartées l'une de l'autre suivant la direction transversale X de manière à ménager entre elles une cavité C qui s'étend vers le bas suivant la direction Y de la hauteur de l'aube, depuis un fond C1 de cavité jusqu'à une ouverture C2 de cavité sur l'extérieur, située au niveau de l'extrémité inférieure du pied d'aube,
- au moins un élément d'attache de l'aube qui est engagé partiellement à l'intérieur de la cavité, la partie engagée dudit au moins un élément d'attache ayant une forme, prise dans un plan défini par les deux directions X et Y, qui s'étend en direction du fond de la cavité en s'évasant suivant la direction transversale X, les deux portions écartées du pied d'aube qui sont au contact de la forme évasée dudit au moins un élément d'attache ayant des formes évasées correspondantes.

La configuration de la préforme d'aube permet de conférer à la zone destinée à former le pied d'aube une géométrie qui est obtenue simplement à partir d'une forme conventionnelle de préforme d'aube. Cette géométrie est adaptée à une fixation d'aube grâce à laquelle, en opération, les sollicitations auxquelles est soumise l'aube ainsi fixée restent dans le plan de tissage de la préforme et ne s'exercent pas transversalement à ce plan comme pour la figure 1A décrite ci-dessus.

En outre, la réalisation des deux peaux écartées transversalement l'une de l'autre va permettre, après fixation de l'aube et lors de son utilisation, de générer un moment quadratique plus élevé que pour la structure de la figure 1B décrite ci-dessus.

La configuration dudit au moins un élément d'attache à forme évasée (ou à moignon) permet de maîtriser le changement de géométrie de l'aube (configuration du pied d'aube avec les deux portions écartées transversalement) en assurant sa fixation/attache de manière efficace. Les deux portions du pied d'aube écartées transversalement l'une de l'autre (ces deux portions sont issues des deux peaux de la préforme écartées transversalement l'une de l'autre) permettent d'accroître le moment quadratique de la structure composite par rapport à une structure telle que celle de la figure 1B.

Selon d'autres caractéristiques possibles :
- chacune des deux portions écartées du pied d'aube comprend une face interne en contact avec une face externe dudit au moins un élément d'attache, la face interne de chaque portion du pied d'aube ayant, dans une zone de contact avec la partie la plus évasée de la face externe dudit au moins un élément d'attache, suivant une vue en section dans un plan défini par les directions X et Y, une inclinaison comprise entre 5° et 35° par rapport àla direction Y;
- ledit au moins un élément d'attache s'étend suivant au moins une partie de la cavité du pied d'aube suivant la direction axiale Z;
- ledit au moins un élément d'attache s'étend suivant une partie de la cavité du pied d'aube et comprend plusieurs éléments d'attache écartés l'un de l'autre suivant la direction axiale Z;
- la cavité du pied d'aube est fermée aux deux extrémités opposées de l'aube qui définissent respectivement un bord d'attaque et un bord de fuite de l'aube éloignés l'un de l'autre suivant la direction axiale Z ;
- la cavité du pied d'aube est ouverte à l'une des deux extrémités opposées de l'aube qui définissent respectivement un bord d'attaque et un bord de fuite de l'aube éloignés l'un de l'autre suivant la direction axiale Z ;
- le système de fixation d'aube comporte des éléments de fixation transversaux qui traversent transversalement ledit au moins un élément d'attache et les deux portions écartées du pied d'aube ;
- dans la préforme d'aube, chacune des deux peaux s'étend suivant la première direction Y sur une partie de la hauteur de la préforme d'aube ;
- la préforme d'aube présente un tissage tridimensionnel monolithique dans la partie de la préforme qui s'étend au-delà des deux peaux en incluant la zone supérieure;
- chacune des deux peaux de la préforme d'aube s'étend suivant la direction axiale Z sur la totalité de la longueur de la préforme d'aube;
- chacune des deux peaux de la préforme d'aube s'étend suivant la direction axiale Z sur une partie de la longueur de la préforme d'aube;
- la partie de la longueur de la préforme d'aube est située entre les deux extrémités opposées de la préforme d'aube qui sont aptes respectivement à former un bord d'attaque et un bord de fuite de l'aube;
- la partie de la longueur de la préforme d'aube s'étend jusqu'à une des deux extrémités opposées de la préforme d'aube qui sont aptes respectivement à former un bord d'attaque et un bord de fuite de l'aube;
- la préforme d'aube comporte en outre une zone complémentaire monolithique en matériau tissé tridimensionnellement qui s'étend notamment contre l'une des deux peaux de la préforme d'aube de manière à former une surépaisseur externe suivant la direction transversale X, la zone complémentaire monolithique formant avec le matériau tissé tridimensionnellement de la préforme d'aube une déliaison qui s'étend dans la zone supérieure jusqu'à l'extrémité supérieure de cette dernière.

Le présent exposé concerne également une turbomachine comprenant un système de fixation d'aube tel que brièvement exposé précédemment.

### Brève description des dessins

L'invention et ses avantages seront mieux compris à la lecture de la description détaillée faite ci-après de différents modes de réalisation de l'invention donnés à titre d'exemples non limitatifs.
[Fig. 1A] La figure 1A est une vue schématique en section transversale d'un système de fixation d'aube par bridage selon l'art antérieur ;
[Fig. 1B] La figure 1B est une vue schématique en section transversale d'un système de fixation tangentielle d'aube selon l'art antérieur ;
[Fig. 2] La figure 2 est une vue schématique en section axiale d'une turbomachine selon un mode de réalisation de l'invention ;
[Fig. 3] La figure 3 est une vue schématique en section transversale d'une préforme d'aube avant sa mise en forme selon un mode de réalisation de l'invention ;
[Fig. 4] La figure 4 est une vue schématique d'un système de fixation d'aube selon un mode de réalisation de l'invention suivant une vue en section transversale ;
[Fig. 5] La figure 5 est une vue schématique partielle agrandie d'une zone de contact entre élément d'ancrage et portion de pied d'aube de la figure 4 ;
[Fig. 6] La figure 6 est une vue schématique du système de fixation d'aube de la figure 4 suivant une vue en section axiale;
[Fig. 7] La figure 7 est une vue schématique d'un système de fixation d'aube selon une variante de réalisation du système de la figure 6 ;
[Fig. 8] La figure 8 est une vue schématique d'un système de fixation d'aube selon une variante de réalisation du système de la figure 4;
[Fig. 9] La figure 9 est une vue schématique du système de fixation d'aube de la figure 4, avant insertion de l'élément d'attache dans le pied d'aube.

### Description des modes de réalisation

Sur l'ensemble des figures, les éléments en commun sont repérés par des références numériques identiques.

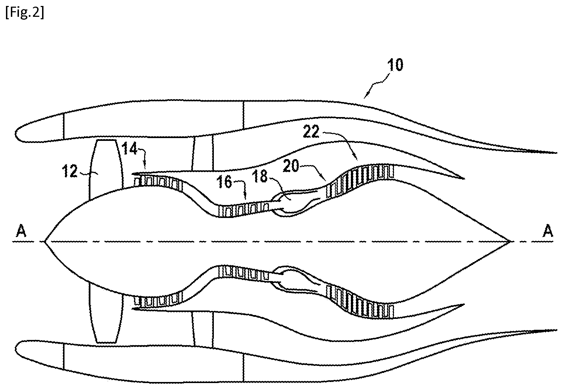

La figure 2 représente, en section axiale passant par un plan vertical contenant l'axe principal A, une turbomachine d'aéronef 10 telle qu'un turboréacteur à double flux selon un mode de réalisation de l'invention.

La turbomachine 10 comporte, d'amont en aval selon la circulation du flux d'air, une soufflante 12, un compresseur basse pression 14, un compresseur haute pression 16, une chambre de combustion 18, une turbine haute pression 20 et une turbine basse pression 22.

La soufflante 12 est munie d'une pluralité d'aubes de soufflante montées angulairement autour de l'axe principal A sur un disque connecté ici à l'arbre basse pression de la turbomachine. Le disque forme une partie d'une structure centrale du moteur de la turbomachine 10.

Une telle aube de soufflante comprend un pied d'aube configuré pour être monté sur le disque en étant fixé à ce dernier et une pale d'aube qui s'étend à partir du pied d'aube en direction du sommet de l'aube. De manière connue, une pale d'aube présente une face extrados et une face intrados qui s'étendent chacune d'amont en aval entre un bord d'attaque et un bord de fuite de l'aube.

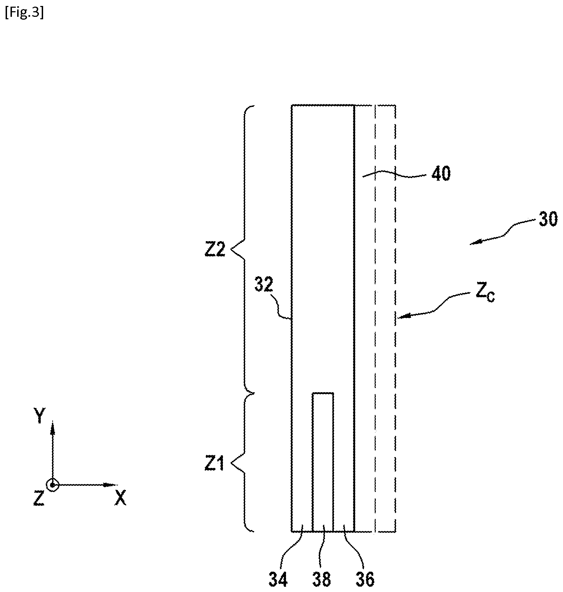

La description qui suit concerne une aube de soufflante telle que décrite ci-dessus en référence à la figure 3 et, notamment, une préforme d'aube de soufflante à partir de laquelle l'aube de soufflante est réalisée, ainsi qu'un système de fixation d'une telle aube sur la turbomachine.

Il convient de noter que la préforme d'aube, l'aube obtenue à partir de cette préforme et le système de fixation d'une telle aube peuvent concerner d'autres types d'aubes de la turbomachine décrite ci-dessus ou d'autres turbomachines. En particulier, les aubes concernées par la présente invention peuvent être des aubes d'un redresseur de flux (OGV) pour une soufflante non carénée, c'est-à-dire des aubes statiques. Les aubes concernées par la présente invention peuvent également concerner des aubes mobiles comme celles de la soufflante décrite ci-dessus, voire, plus généralement, des aubes de compresseurs ou de turbines pour turbomachine. On notera que les aubes concernées peuvent être ou non équipées d'un mécanisme à calage variable. Par ailleurs, la turbomachine comportant de telles aubes peut être carénée ou non.

La figure 3 représente de manière schématique une section transversale d'une préforme d'aube 30 suivant une vue prise dans un plan défini par deux directions X (direction transversale représentant la direction de la largeur ou épaisseur de la préforme d'aube et donc de l'aube) et Y (direction qui représente la direction de la hauteur de la préforme d'aube et donc de l'aube), étant entendu que la préforme d'aube s'étend également suivant la direction axiale ou longitudinale Z perpendiculaire aux deux premières directions et correspondant à la corde de l'aube.

Comme représenté sur la figure 3, la préforme d'aube 30 comprend une première zone ou zone inférieure Z1 qui est apte à former un pied d'aube (la zone Z1 peut englober le pied d'aube et également une partie appelée échasse située au-dessus et qui forme une transition entre le pied et la pale de l'aube) et une deuxième zone ou zone supérieure Z2, située au-dessus de la zone Z1, et qui est apte à former une pale d'aube. La délimitation entre les zones Z1 et Z2 peut être différente et, par exemple, la zone Z2 peut inclure l'échasse de l'aube comme c'est le cas sur la représentation de la figure 3.

La préforme d'aube de la figure 3 est réalisée manière connue en matériau composite tissé suivant un tissage tridimensionnel de fibres, par exemple de fibres de carbone, par exemple selon une armure interlock 3D..

La préforme d'aube de la figure 3 est à un stade de fabrication où elle n'a pas encore été mise en forme et peut donc être qualifiée d'ébauche de préforme.

À l'extrémité supérieure, dans la deuxième zone Z2, le tissage débute par la réalisation d'une peau ou tronçon supérieur 32 qui formera la pale et l'échasse de l'aube. Cette zone Z2 de la préforme présente un tissage tridimensionnel monolithique.

Une zone de déliaison débute en dessous de ce tronçon 32 et comprend un première peau ou tronçon inférieur 34 et une deuxième peau ou tronçon inférieur 36 qui sont tissés conjointement de manière déliée avec un plan de déliaison 38. Des méthodes de tissage permettant de réaliser une telle déliaison sont bien connues dans le domaine du tissage 3D.

Les deux peaux ou tronçons inférieurs 34 et 36 sont écartés l'un de l'autre suivant la direction transversale X en raison de la déliaison réalisée dans le matériau tissé 3D. Comme représenté sur la figure 3, chaque peau inférieure 34,36 s'étend suivant la direction Y sur une partie seulement de la hauteur de la préforme d'aube 30 et qui correspond ici à la hauteur de la première zone Z1 correspondant au pied de l'aube.

Chaque peau inférieure 34,36 est destinée à former une portion du pied de l'aube.

On notera qu'une étape de mise en forme telle qu'une étape connue de découpage par jet d'eau pour les lisières et les bords non utiles du tissage peut être mise en œuvre sur l'ébauche de la figure 3 ainsi qu'une étape de taille sur les fibres tissées (connue en terminologie anglo-saxonne sous le terme de « trimming »).

La représentation illustrée sur la figure 3 laisse penser que le plan de déliaison 38 s'étend suivant la totalité de la dimension axiale (corde) ou longueur de l'ébauche de préforme d'aube, prise suivant la direction axiale Z.

Cette configuration peut en effet être envisagée en fonction de la configuration finale retenue pour l'aube et son système de fixation.

Toutefois, d'autres configurations peuvent être envisagées telles qu'une configuration où chacune des deux peaux inférieures 34 et 36 séparées l'une de l'autre par le plan de déliaison 38 s'étend sur une partie seulement de la dimension axiale (corde) de l'ébauche de préforme d'aube. Il en est de même pour le plan de déliaison 38.

L'exemple de tissage décrit ci-dessus n'est qu'un exemple parmi de nombreux autres exemples de tissage connus de l'homme du métier. En particulier, d'autres déliaisons d'autres techniques de tissage telles que des croisements de couches, des sorties de couches ou des transitions d'épaisseur pour obtenir une géométrie de préforme analogue peuvent être utilisées. L'homme du métier trouvera notamment de nombreux exemples de tissage dans le document WO 2014/076408.

L'ébauche de préforme d'aube peut ensuite être humidifiée pour l'assouplir et permettre un cadrage plus aisé des fibres. L'ébauche est ensuite introduite dans un moule de formage dont l'espace intérieur est ajusté à la géométrie recherchée pour la préforme d'aube.

La préforme d'aube ainsi mise en forme est disposée dans un moule d'injection, aux dimensions de l'aube finale souhaitée. Un ou plusieurs inserts peuvent en outre être insérés dans l'espace formé entre les deux peaux 34 et 36 afin de maintenir le volume interne de cet espace et d'empêcher la matrice de remplir ce volume. La matrice, par exemple une résine époxy, est alors injectée selon un procédé connu tel qu'un procédé connu sous la terminologie LCM (acronyme signifiant en terminologie anglo-saxonne «Liquid Composite Molding »).

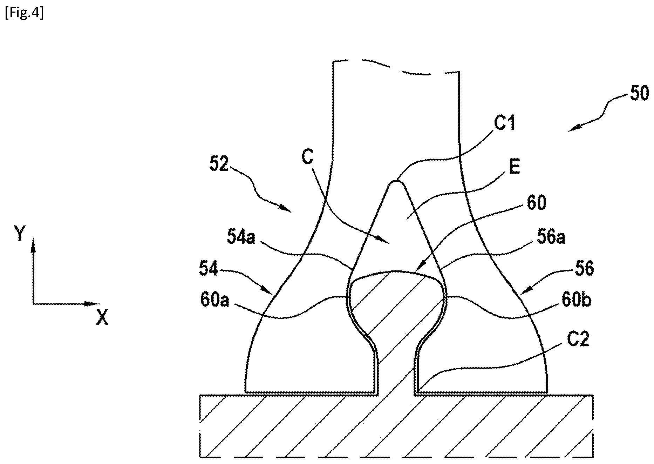

la figure 4 illustre en section transversale dans le plan défini par les directions X et Y une vue partielle agrandie d'un système de fixation d'aube 50 selon un mode de réalisation de l'invention.

Le système de fixation d'aube 50 comprend, d'une part, une aube 52 telle que celle obtenue comme décrit plus haut à partir de l'ébauche de préforme d'aube 30 de la figure 3 et, d'autre part, au moins un élément de fixation ou d'attache métallique de l'aube 60. Cet élément d'attache peut provenir d'une pièce inférieure par exemple du disque de la turbomachine mentionné plus haut ou former une pièce rapportée, par exemple par fixation notamment au moyen de vis, servant à la fixation de l'aube à la turbomachine.

L'aube 52 comprend plus particulièrement un pied d'aube comprenant deux portions ou jambes 54 et 56 qui sont écartées l'une de l'autre suivant la direction transversale X de manière à ménager entre elles une cavité interne C. Les portions ou jambes 54 et 56 sont formées à partir des peaux inférieures écartées 34 et 36 de la figure 3 et s'étendent axialement suivant la direction axiale (corde) Z de l'aube (l'écartement des peaux l'une de l'autre permet d'accroître la raideur). La cavité interne C est formée à partir de l'espace 38 entre les deux peaux 34 et 36 et s'étend également suivant la direction axiale Z de l'aube.

Comme représenté sur la figure 4, la cavité interne C comprend un fond C1 situé dans la zone de l'aube où les deux portions ou jambes 54 56 se rejoignent et s'étend suivant la direction Y vers l'extrémité inférieure du pied d'aube jusqu'à une ouverture de cavité C2 située au droit de l'extrémité inférieure du pied d'aube.

La cavité interne C définie entre les deux portions écartées 54 et 56 présente une forme bombée ou évasée dans sa partie interne située entre l'ouverture C2 et le fond C1. On notera que cette forme est réalisée lors de la mise en forme de la préforme et est ensuite figée géométriquement lors de la densification de la préforme par la résine.

L'élément d'attache de l'aube 60 est engagé partiellement à l'intérieur de la cavité C et s'étend ainsi depuis son ouverture C2 jusqu'à l'intérieur de la cavité, en restant toutefois à distance du fond C1. Dans la vue de la figure 4, l'élément d'attache 60 présente une forme resserrée au niveau de l'ouverture de cavité C2 et qui s'évase progressivement en direction de la partie centrale de la cavité, adoptant ainsi une forme générale de bulbe ou de moignon.

La configuration de l'élément d'attache et des portions écartées du pied d'aube définissant entre elles la cavité interne dans laquelle l'élément d'attache est disposé permet d'assurer de manière fiable et simple la fixation de l'aube, tout en maîtrisant le moment quadratique grâce à l'écartement des deux portions du pied d'aube. L'écartement des portions du pied d'aube permet d'assurer une plus grande raideur vis-à-vis des modes de flexion auxquels est soumise l'aube. On notera que l'élément d'attache permet non seulement d'assurer l'attache ou l'accrochage du pied d'aube mais également l'écartement des deux portions du pied d'aube.

La configuration des portions écartées et épaissies du pied d'aube permet de faire travailler mécaniquement les portions de pied d'aube jusqu'en bas de l'aube mais dans des domaines limités (hors plan et en compression).

Les deux portions écartées 54 et 56 du pied d'aube sont resserrées autour de la forme de bulbe de l'élément d'attache 60 et comprennent des faces internes 54a et 56a qui sont en contact localement avec des faces externes latérales 60a et 60b de l'élément d'attache à l'endroit où la forme de l'élément d'attache est la plus évasée. Les faces internes 54a et 56a se prolongent ensuite en convergeant en direction du fond C1 de la cavité sans toutefois se rapprocher trop rapidement l'une de l'autre après la zone de contact avec la forme évasée de l'élément d'attache.

En effet, il est préférable que les faces internes 54a et 56a restent les plus parallèles possibles entre elles après avoir dépassé la zone de contact, ceci afin de limiter les sollicitations mécaniques du matériau dans la direction hors-plan.

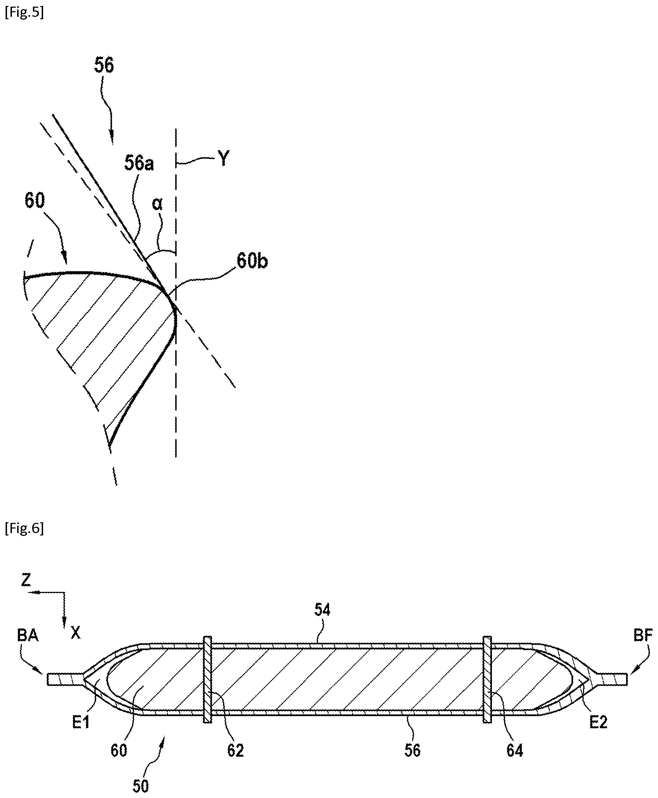

La figure 5 représente de manière schématique partielle la zone de contact entre la face externe 60b de l'élément d'attache 60 et la face interne 56a de la portion 56 et illustre l'angle d'inclinaison α de la face interne avec la direction verticale Y (une disposition symétrique est envisagée pour l'autre portion 54). Dans cet exemple, l'angle d'inclinaison α est compris entre 5° et 35° afin que la pente de la courbe formée par la face interne de chaque portion de pied d'aube, immédiatement après la zone de contact, soit la moins raide possible.

La figure 6 illustre une vue schématique en section dans un plan défini par les directions X et Z au niveau de la partie évasée de l'élément d'attache 60 de la figure 4. Les épaisseurs des deux portions 54 et 56 ont été volontairement réduites pour les besoins de l'illustration.

Comme représenté sur cette figure, la cavité interne C est fermée aux deux extrémités opposées de l'aube qui définissent respectivement un bord d'attaque BA et un bord de fuite BF de l'aube alignés l'un avec l'autre suivant la corde de l'aube.

Dans la représentation de la figure 6 les deux portions écartées du pied d'aube 54 et 56 se rejoignent chacune à leurs deux extrémités opposées pour former au niveau du pied d'aube la partie correspondante des bords d'attaque et de fuite, étant entendu que les bords d'attaque et de fuite s'étendent suivant toute la hauteur de l'aube (perpendiculaire au plan de la figure 6).

L'élément d'attache 60 s'étend axialement suivant la quasi-totalité de la dimension axiale (corde) ou longueur de l'aube, à l'exception toutefois de deux espaces internes E1 et E2 encadrant l'élément d'attache60 et situés chacun entre une extrémité de l'élément d'attache et l'un des bords correspondants d'attaque et de fuite. Ces espaces internes s'étendent par exemple sur une partie de la hauteur de l'aube et peuvent être obtenus en réalisant une déliaison suivant une partie de la hauteur de l'aube. Ces espaces internes ont la même fonction que la cavité interne C décrite ci-dessus.

Des éléments de fixation transversaux 62 et 64, tels que des vis, complètent le système de fixation d'aube en solidarisant transversalement l'élément d'attache 60 aux deux portions écartées de pied d'aube 54 et 56, ce qui apporte une sécurité supplémentaire en termes de fixation.

On notera que la partie supérieure de la cavité interne C identifiée par la lettre E sur la figure 4 peut être remplie par un matériau d'âme, tel qu'une mousse de remplissage, par exemple au moment de l'injection de la préforme d'aube.

De même, les espaces internes E1 et E2 visibles sur la figure 6 peuvent également être remplis par un matériau d'âme similaire. Ce remplissage peut se faire après l'assemblage afin d'éviter d'induire des contraintes géométriques.

L'obtention de la préforme peut être réalisée par exemple de deux manières :
- soit par un procédé de co-injection, l'élément d'attache ou moignon 60 étant inséré entre les peaux inférieures 54 et 56, puis les éléments sont cuits ensemble dans un moule après injection de la résine ;
- soit par insertion et collage de l'élément d'attache ou moignon 60 entre les peaux une fois la préforme imprégnée, l'ensemble étant ensuite placé dans un autoclave pour effectuer la polymérisation (l'insertion est réalisée avant polymérisation lorsque la préforme est souple et l'appairage est relativement simple).

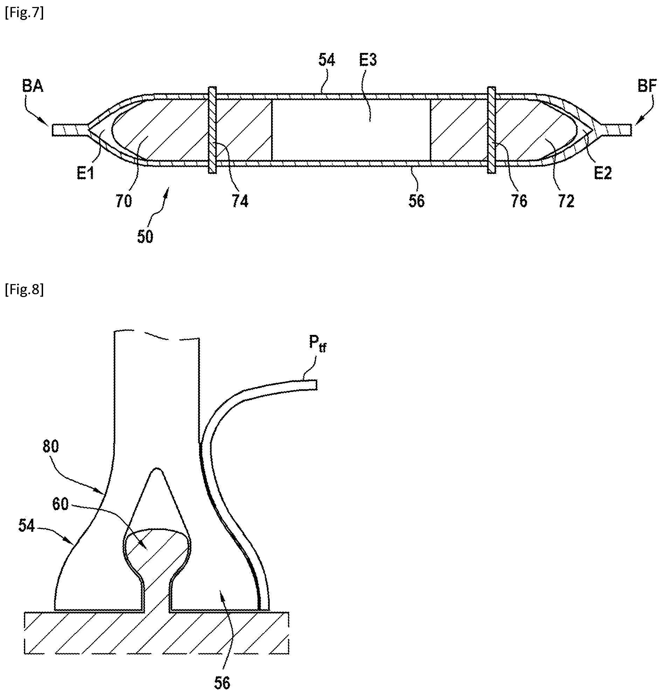

La figure 7 illustre une vue schématique en section dans un plan défini par les directions X et Z analogue à la vue de la figure 6.

Toutefois, le système de fixation d'aube comporte ici deux éléments d'attache 70 et 72 qui sont éloignés l'un de l'autre suivant la direction axiale Z (corde) et qui sont engagés à l'intérieur de la cavité interne C de la figure 4 entre les deux portions écartées 54 et 56 du pied d'aube.

L'écartement axial entre les deux éléments d'attache 70 et 72 ménage entre ces éléments un espace interne ou évidement E3 qui s'étend par exemple suivant toute la hauteur de la cavité C et peut également être réalisé par l'intermédiaire d'une des liaisons dans le tissage comme pour les espaces E1 et E2. Cette discontinuité au niveau de l'élément d'attache permet de réduire le poids de l'ensemble.

La configuration discontinue représentée sur la figure 7 n'est qu'un exemple possible et peut bien entendu prendre d'autres formes non représentées ici avec un nombre d'éléments d'attache différents et/ou avec des formes différentes.

L'espace interne ou évidement E3 peut également être rempli avec un matériau de remplissage comme décrit plus haut.

Des éléments de fixation transversaux 74 et 76, tels que des vis, complètent le système de fixation d'aube en solidarisant transversalement les éléments d'attache respectifs 70 et 72 aux deux portions écartées de pied d'aube 54 et 56.

Selon une variante de réalisation illustrée en pointillés sur la figure 3, la préforme d'aube peut en outre comporter une zone complémentaire monolithique en matériau tissé tridimensionnellement Zc, réalisée sous la forme d'une peau ou tronçon supplémentaire ou pan libre, qui s'étend notamment contre l'une des deux peaux inférieures (contre la face externe de cette peau), à savoir ici la peau 36, de manière à former une surépaisseur externe suivant la direction transversale X. La peau supplémentaire s'étend ici suivant toute la hauteur de la préforme et est tissée conjointement de manière déliée avec un autre plan de déliaison 40 qui, ici, s'étend dans la zone supérieure Z2 jusqu'à l'extrémité supérieure de celle-ci.

Une fois le tissage terminé, la peau supplémentaire est découpée de manière à former une peau ou tronçon transversal qui formera une plate-forme Ptf de l'aube comme pour l'aube 80 illustrée sur la figure 8 (cette aube reprend les caractéristiques décrites en relation avec la figure 4).

On notera que cette surépaisseur permet de concevoir une portion de pied plus épaisse notamment pour augmenter la résistance mécanique en termes de raideur ou en ce qui concerne l'assemblage par boulonnage d'éléments de fixation transversaux.

Par ailleurs, la réalisation d'une plate-forme intégrée comme illustré sur la figure 8 permet de réduire l'épaisseur ou dimension transversale de l'aube dans sa partie constituant la pale, conférant ainsi un profil aérodynamique plus mince de la pale.

Plusieurs matériaux fibreux peuvent être utilisés pour réaliser cette variante, en particulier un premier type de fibres pour réaliser la préforme de la figure 3 et un deuxième type de fibres pour réaliser la plate-forme et la portion inférieure renforcée du pied d'aube sous la plate-forme.

Selon une variante de réalisation non représentée, la cavité interne est ouverte à l'une et/ou à l'autre des deux extrémités opposées définissant les bords d'attaque et de fuite de l'aube suivant la corde de l'aube. Dans cette configuration, l'élément d'attache peut avoir une section transversale, dans un plan défini par les directions X et Y, en forme de queue d'aronde.

À titre d'exemple l'aube est obtenue de manière monobloc par tissage tridimensionnel d'une préforme fibreuse telle que celle décrite plus haut.

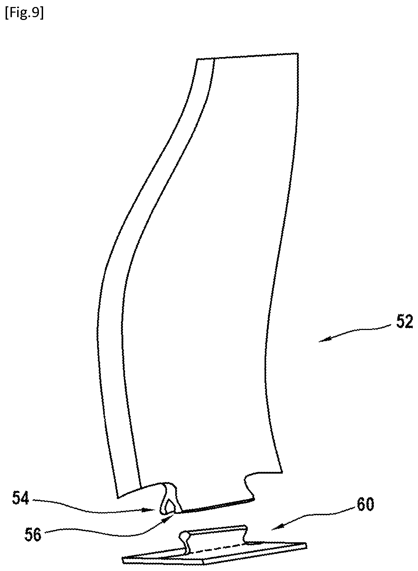

La figure 9 illustre l'aube 52 de la figure 4 avant insertion de l'élément d'attache 60 entre les portions écartées 54, 56 du pied d'aube.

Bien que la présente invention ait été décrite en se référant à des exemples de réalisation spécifiques, il est entendu que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Système de fixation d'une aube pour turbomachine, comprenant une aube (52) pour turbomachine réalisée de manière monolithique en matériau composite à partir d'une préforme d'aube (30) en matériau composite tissé obtenue par tissage tridimensionnel, la préforme d'aube ayant été mise en forme dans un moule et noyée dans une matrice, la préforme d'aube (30) présentant une forme générale qui est allongée suivant une première direction Y, représentant la direction de la hauteur de l'aube, et qui s'étend suivant deux autres directions perpendiculaires dont une deuxième direction axiale Z représentant la direction de la corde de l'aube et une troisième direction transversale X représentant la direction de l'épaisseur de l'aube, la préforme d'aube (30) comprenant, alignées suivant la première direction Y, une zone inférieure (Z1) apte à former un pied d'aube et une zone supérieure (Z2) apte à former une pale d'aube incluant un sommet d'aube, la zone inférieure (Z1) étant tissée et conformée de manière à comprendre deux peaux (34, 36) écartées l'une de l'autre suivant la direction transversale X, ménageant ainsi entre les deux peaux un espace libre qui forme une déliaison (38) dans le matériau tissé, chaque peau (34, 36) étant apte à former une portion du pied d'aube,
**caractérisé en ce que** le système de fixation comporte :
- au niveau du pied d'aube, deux portions (54, 56) du pied d'aube écartées l'une de l'autre suivant la direction transversale X de manière à ménager entre elles une cavité (C) qui s'étend vers le bas suivant la direction Y de la hauteur de l'aube, depuis un fond (C1) de cavité jusqu'à une ouverture (C2) de cavité sur l'extérieur, située au niveau de l'extrémité inférieure du pied d'aube,
- au moins un élément d'attache (60) de l'aube qui est engagé partiellement à l'intérieur de la cavité, la partie engagée dudit au moins un élément d'attache (60) ayant une forme, prise dans un plan défini par les deux directions X et Y, qui s'étend en direction du fond de la cavité en s'évasant suivant la direction transversale X, les deux portions écartées (54, 56) du pied d'aube qui sont au contact de la forme évasée dudit au moins un élément d'attache (60) ayant des formes évasées correspondantes.

2. Système de fixation d'aube selon la revendication 1, **caractérisé en ce que** chacune des deux portions (54, 56) écartées du pied d'aube comprend une face interne (54a, 56a) en contact avec une face externe (60a, 60b) dudit au moins un élément d'attache (60), la face interne de chaque portion du pied d'aube ayant, dans une zone de contact avec la partie la plus évasée de la face externe dudit au moins un élément d'attache, suivant une vue en section dans un plan défini par les directions X et Y, une inclinaison comprise entre 5° et 35° par rapport à la direction Y.

3. Système de fixation d'aube selon la revendication 1 ou 2, **caractérisé en ce que** ledit au moins un élément d'attache (60) s'étend suivant au moins une partie de la cavité (C) du pied d'aube suivant la direction axiale Z.

4. Système de fixation d'aube selon l'une des revendications 1 à 3, **caractérisé en ce que** ledit au moins un élément d'attache (60) s'étend suivant une partie de la cavité du pied d'aube et comprend plusieurs éléments d'attache (70, 72) écartés l'un de l'autre suivant la direction axiale Z.

5. Système de fixation d'aube selon l'une des revendications 1 à 4, **caractérisé en ce que** la cavité (C) du pied d'aube est fermée aux deux extrémités opposées de l'aube qui définissent respectivement un bord d'attaque BA et un bord de fuite BF de l'aube éloignés l'un de l'autre suivant la direction axiale Z.

6. Système de fixation d'aube selon l'une des revendications 1 à 4, **caractérisé en ce que** la cavité du pied d'aube est ouverte à l'une des deux extrémités opposées de l'aube qui définissent respectivement un bord d'attaque BA et un bord de fuite BF de l'aube éloignés l'un de l'autre suivant la direction axiale Z.

7. Système de fixation d'aube selon l'une des revendications 1 à 6, **caractérisé en ce qu'**il comporte des éléments de fixation transversaux (62, 64 ; 74, 76) qui traversent transversalement ledit au moins un élément d'attache (60 ; 70, 72) et les deux portions écartées du pied d'aube.

8. Système de fixation d'aube selon l'une des revendications 1 à 7, **caractérisé en ce que**, dans la préforme d'aube (30), chacune des deux peaux (34, 36) s'étend suivant la première direction Y sur une partie de la hauteur de la préforme d'aube.

9. Système de fixation d'aube selon l'une des revendications 1 à 8, **caractérisé en ce que** la préforme d'aube (30) présente un tissage tridimensionnel monolithique dans la partie de la préforme qui s'étend au-delà des deux peaux (34, 36) en incluant la zone supérieure.

10. Système de fixation d'aube selon l'une des revendications 1 à 9, **caractérisé en ce que** chacune des deux peaux (34, 36) de la préforme d'aube (30) s'étend suivant la direction axiale Z sur la totalité de la longueur de la préforme d'aube.

11. Système de fixation d'aube selon l'une des revendications 1 à 10, **caractérisé en ce que** chacune des deux peaux (34, 36) de la préforme d'aube (30) s'étend suivant la direction axiale Z sur une partie de la longueur de la préforme d'aube.

12. Système de fixation d'aube selon la revendication 11, **caractérisé en ce que** la partie de la longueur de la préforme d'aube (30) est située entre les deux extrémités opposées de la préforme d'aube qui sont aptes respectivement à former un bord d'attaque et un bord de fuite de l'aube.

13. Système de fixation d'aube selon la revendication 11, **caractérisé en ce que** la partie de la longueur de la préforme d'aube (30) s'étend jusqu'à une des deux extrémités opposées de la préforme d'aube qui sont aptes respectivement à former un bord d'attaque et un bord de fuite de l'aube.

14. Système de fixation d'aube selon l'une des revendications 1 à 13, **caractérisé en ce que** la préforme d'aube (30) comporte en outre une zone complémentaire monolithique en matériau tissé tridimensionnellement qui s'étend notamment contre l'une des deux peaux (34, 36) de la préforme d'aube de manière à former une surépaisseur externe suivant la direction transversale X, la zone complémentaire monolithique formant avec le matériau tissé tridimensionnellement de la préforme d'aube une déliaison qui s'étend dans la zone supérieure jusqu'à l'extrémité supérieure de cette dernière.

15. Turbomachine comprenant un système de fixation d'aube selon l'une des revendications 1 à 14.

## Patentansprüche

1. Schaufelbefestigungssystem für Turbomaschine, umfassend eine Schaufel (52) für Turbomaschine, die monolithisch aus einem Verbundmaterial anhand eines Schaufelvorformlings (30) aus gewebtem Verbundmaterial, das durch dreidimensionales Weben erlangt wird, gefertigt ist, wobei die Schaufelvorformling in einer Form geformt und in eine Matrize eingebettet worden war, wobei der Schaufelvorformling (30) eine allgemeine Form aufweist, die in einer ersten Richtung Y, die die Richtung der Höhe der Schaufel darstellt, länglich ist und sich in zwei weiteren senkrechten Richtungen erstreckt, wovon eine zweite axiale Richtung Z die Richtung der Sehne der Schaufel darstellt und eine dritte Querrichtung X die Richtung der Stärke der Schaufel darstellt, der Schaufelvorformling (30), ausgerichtet entlang der ersten Richtung Y, umfassend einen unteren Bereich (Z1), der geeignet ist, um einen Schaufelfuß zu bilden, und einen oberen Bereich (Z2), der geeignet ist, um ein Schaufelblatt zu bilden, das eine Schaufelspitze beinhaltet, wobei der untere Bereich (Z1) gewebt und geformt ist, um zwei Häute (34, 36) zu umfassen, die entlang der Querrichtung X voneinander beabstandet sind, wodurch zwischen den beiden Häuten ein freier Raum entsteht, der eine Auflockerung (38) in dem gewebten Material bildet, wobei jede Haut (34, 36) geeignet ist, um einen Abschnitt des Schaufelfußes zu bilden,
**dadurch gekennzeichnet, dass** das Befestigungssystem Folgendes umfasst:
- an dem Schaufelfuß zwei Abschnitte (54, 56) des Schaufelfußes, die entlang der Querrichtung X voneinander beabstandet sind, um untereinander einen Hohlraum (C) zu bilden, der sich entlang der Richtung Y der Höhe der Schaufel von einem Boden (C1) des Hohlraums nach unten zu einer Öffnung (C2) des Hohlraum zu der Außenseite erstreckt, die sich an dem unteren Ende des Schaufelfußes befindet,
- mindestens ein Anbringungselement (60) der Schaufel, das teilweise im Innern des Hohlraum eingegriffen ist, wobei der in Eingriff stehende Teil des mindestens einen Anbringungselements (60) eine Form aufweist, die in einer durch die zwei Richtungen X und Y definierten Ebene genommen eine Form aufweist, die sich in Richtung des Bodens des Hohlraums erstreckt, indem sie sich entlang der Querrichtung X aufweitet, die zwei beabstandeten Abschnitte (54, 56) des Schaufelfußes, die mit der aufgeweiteten Form des mindestens einen Anbringungselements (60) in Kontakt sind, entsprechende aufgeweitete Formen aufweisen.

2. Schaufelbefestigungssystem nach Anspruch 1, **dadurch gekennzeichnet, dass** jeder der zwei beabstandeten Abschnitte (54, 56) des Schaufelfußes eine Innenfläche (54a, 56a) in Kontakt mit einer Außenfläche (60a, 60b) des mindestens einen Anbringungselements (60) umfasst, die Innenfläche von jedem Abschnitt des Schaufelfußes in einem Kontaktbereich mit dem an dem weitesten aufgeweiteten Teil der Außenfläche des mindestens einen Anbringungselements gemäß einer Querschnittsansicht in einer durch die Richtung X und Y definierten Ebene eine Neigung zwischen 5° und 35° in Bezug auf die Richtung Y aufweist.

3. Schaufelbefestigungssystem nach Anspruch 1 oder 2, **dadurch gekennzeichnet, dass** das mindestens eine Anbringungselement (60) sich entlang mindestens eines Teils des Hohlraums (C) des Schaufelfußes entlang der axialen Richtung Z erstreckt.

4. Schaufelbefestigungssystem nach einem der Ansprüche 1 bis 3, **dadurch gekennzeichnet, dass** sich das mindestens eine Anbringungselement (60) entlang eines Teils des Schaufelfußhohlraums erstreckt und mehrere Anbringungselemente (70, 72) umfasst, die entlang der axialen Richtung Z voneinander beabstandet sind.

5. Schaufelbefestigungssystem nach einem der Ansprüche 1 bis 4, **dadurch gekennzeichnet, dass** der Hohlraum (C) des Schaufelfußes an den zwei gegenüberliegenden Enden der Schaufel geschlossen ist, die jeweils eine Anströmkante BA und eine Abströmkante BF der Schaufel definieren, die in der axialen Richtung Z voneinander entfernt sind.

6. Schaufelbefestigungssystem nach einem der Ansprüche 1 bis 4, **dadurch gekennzeichnet, dass** der Hohlraum des Schaufelfußes an einem der zwei gegenüberliegenden Enden der Schaufel geschlossen ist, die jeweils eine Anströmkante BA und eine Abströmkante BF der Schaufel definieren, die in der axialen Richtung Z voneinander entfernt sind.

7. Schaufelbefestigungssystem nach einem der Ansprüche 1 bis 6, **dadurch gekennzeichnet, dass** es Querbefestigungselemente (62, 64; 74, 76) aufweist, die das mindestens eine Anbringungselement (60; 70, 72) und die zwei beabstandeten Abschnitte des Schaufelfußes quer durchqueren.

8. Schaufelbefestigungssystem nach einem der Ansprüche 1 bis 7, **dadurch gekennzeichnet, dass** sich in dem Schaufelvorformling (30) jede der zwei Häute (34, 36) entlang der ersten Richtung Y über einen Teil der Höhe des Schaufelvorformlings erstreckt.

9. Schaufelbefestigungssystem nach einem der Ansprüche 1 bis 8, **dadurch gekennzeichnet, dass** der Schaufelvorformling (30) in dem Teil des Vorformlings, der sich über die zwei Häute (34, 36) hinaus erstreckt, unter Einschluss des oberen Bereichs ein monolithisches dreidimensionales Gewebe aufweist.

10. Schaufelbefestigungssystem nach einem der Ansprüche 1 bis 9, **dadurch gekennzeichnet, dass** sich jede der zwei Häute (34, 36) des Schaufelvorformlings (30) in der axialen Richtung Z über die gesamte Länge des Schaufelvorformlings erstreckt.

11. Schaufelbefestigungssystem nach einem der Ansprüche 1 bis 10, **dadurch gekennzeichnet, dass** sich jede der zwei Häute (34, 36) des Schaufelvorformlings (30) in der axialen Richtung Z über einen Teil der Länge des Schaufelvorformlings erstreckt.

12. Schaufelbefestigungssystem nach Anspruch 11, **dadurch gekennzeichnet, dass** sich der Teil der Länge des Schaufelvorformlings (30) zwischen den zwei gegenüberliegenden Enden des Schaufelvorformlings befindet, die geeignet sind, um jeweils eine Anströmkante und eine Abströmkante der Schaufel zu bilden.

13. Schaufelbefestigungssystem nach Anspruch 11, **dadurch gekennzeichnet, dass** sich der Teil der Länge des Schaufelvorformlings (30) bis zu einem der zwei gegenüberliegenden Enden des Schaufelvorformlings erstreckt, die jeweils geeignet sind, eine Anströmkante und eine Abströmkante der Schaufel zu bilden.

14. Schaufelbefestigungssystem nach einem der Ansprüche 1 bis 13, **dadurch gekennzeichnet, dass** der Schaufelvorformling (30) ferner einen monolithischen komplementären Bereich aus dreidimensional gewebtem Material umfasst, der sich insbesondere gegen eine der zwei Häute (34, 36) des Schaufelvorformlings erstreckt, um eine äußere Verdickung entlang der Querrichtung X zu bilden, der monolithische komplementäre Bereich mit dem dreidimensional gewebten Material der Schaufelvorformling eine Verbindungslösung bildet, die sich in den oberen Bereich bis zu dem oberen Ende davon erstreckt.

15. Turbomaschine, umfassend ein Schaufelbefestigungssystem nach einem der Ansprüche 1 bis 14.

## Claims

1. A system for fixing a blade for a turbomachine, **characterized in that** it comprises a blade (52) for a turbomachine made monolithicly of composite material from a blade preform (30) made of woven composite material obtained by three-dimensional weaving, the blade preform having been shaped in a mold and embedded in a matrix, the blade preform (30) having a general shape which is elongated in a first direction Y, representing the direction of the height of the blade, and which extends in two other perpendicular directions including a second axial direction Z representing the direction of the chord of the blade and a third transverse direction X representing the direction of the thickness of the blade, the blade preform (30) comprising, aligned in the first direction Y, a lower area (Z1) able to form a blade root and an upper area (Z2) able to form a blade airfoil including a blade tip, the lower area (Z1) being woven and shaped so as to comprise two skins (34 , 36) spaced apart from each other in the transverse direction X, thus providing between the two skins a free space which forms a non-interlinking (38) in the woven material, each skin (34, 36) being able to form a portion of the blade root,
**characterized in that** the fixing system comprises:
at the level of the blade root, two portions (54, 56) of the blade root spaced apart from each other in the transverse direction X so as to provide therebetween a cavity (C) which extends downwards in the direction Y of the height of the blade, from a cavity bottom (C1) to a cavity opening (C2) on the outside, located at the level of the lower end of the blade root,
- at least one attachment element (60) of the blade which is partially engaged inside the cavity, the engaged part of said at least one attachment element (60) having a shape, taken in a plane defined by the two directions X and Y, which extends towards the bottom of the cavity while flaring out in the transverse direction X, the two spaced apart portions (54, 56) of the blade root which are in contact with the flared shape of said at least one attachment element (60) having corresponding flared shapes.

2. The blade fixing system according to claim 1, **characterized in that** each of the two spaced apart portions (54, 56) of the blade root comprises an inner face (54a, 56a) in contact with an outer face (60a , 60b) of said at least one attachment element (60), the inner face of each portion of the blade root having, in an area of contact with the most flared part of the outer face of said at least one attachment element, according to a sectional view in a plane defined by the directions X and Y, an inclination comprised between 5° and 35° relative to the direction Y.

3. The blade fixing system according to claim 1 or 2, **characterized in that** said at least one attachment element (60) extends along at least part of the cavity (C) of the blade root in the axial direction Z.

4. The blade fixing system according to any of claims 1 to 3, **characterized in that** said at least one attachment element (60) extends along part of the cavity of the blade root and comprises several attachment elements (70, 72) spaced apart from each other in the axial direction Z.

5. The blade fixing system according to any of claims 1 to 4, **characterized in that** the cavity (C) of the blade root is closed at the two opposite ends of the blade which respectively define a leading edge BA and a trailing edge BF of the blade away from each other in the axial direction Z.

6. The blade fixing system according to any of claims 1 to 4, **characterized in that** the cavity of the blade root is open at one of the two opposite ends of the blade which respectively define a leading edge BA and a trailing edge BF of the blade away from each other in the axial direction Z.

7. The blade fixing system according to any of claims 1 to 6, **characterized in that** it includes transverse fixing elements (62, 64; 74, 76) which pass transversely through said at least one attachment element (60; 70, 72) and the two spaced apart portions of the blade root.

8. The blade fixing system according to any of claims 1 to 7, **characterized in that**, in the blade preform (30), each of the two skins (34, 36) extends in the first direction Y over part of the height of the blade preform.

9. The blade fixing system according to any of claims 1 to 8, **characterized in that** the blade preform (30) has a monolithic three-dimensional weaving in the part of the preform which extends beyond the two skins (34, 36) including the upper area.

10. The blade fixing system according to any of claims 1 to 9, **characterized in that** each of the two skins (34, 36) of the blade preform (30) extends in the axial direction Z over the entire length of the blade preform.

11. The blade fixing system according to any of claims 1 to 10, **characterized in that** each of the two skins (34, 36) of the blade preform (30) extends in the axial direction Z over part of the length of the blade preform.

12. The blade fixing system according to claim 11, **characterized in that** the part of the length of the blade preform (30) is located between the two opposite ends of the blade preform which are respectively able to form a leading edge and a trailing edge of the blade.

13. The blade fixing system according to claim 11, **characterized in that** the part of the length of the blade preform (30) extends to one of the two opposite ends of the blade preform which are respectively able to form a leading edge and a trailing edge of the blade.

14. The blade fixing system according to any of claims 1 to 13, **characterized in that** the blade preform (30) further includes a monolithic complementary area made of three-dimensionally woven material which extends in particular against the one of the two skins (34, 36) of the blade preform so as to form an external extra thickness in the transverse direction X, the monolithic complementary area forming with the three-dimensionally woven material of the blade preform a non-interlinking which extends in the upper area to the upper end of the latter.

15. A turbomachine comprising a blade fixing system according to any of claims 1 to 14.
